# EUROPEAN PATENT APPLICATION

(11) **EP 1 475 735 A1**
(43) Date of publication of application: **10.11.2004**
(21) Application number: 04251354.9
(22) Date of filing: 09.03.2004
(51) Int. Cl.: G06F 17/60

(54) **Automated electronic mail document printing**

(30) Priority: 18.03.2003 US 392097
(71) Applicant: Xerox Corporation, Rochester, New York 14644 (US)
(72) Inventor: Nathan, Daniel R., Hemel Hempstead Herts HP1 1RQ (GB)
(74) Representative: Rackham, Stephen Neil

(57) **Abstract**

A simplification and automation of the process of printing of electronic mail documents with their associated electronic attachments is presented. An electronic mail printing function accesses computer print functionality external to the electronic mail application program to associate the proper application program with each electronic attachment to an electronic mail document, and to print that attachment. One computer print functionality used is the computer operating system's shell print command.

## Description

The present invention pertains to printing multiple electronic mail documents, including files attached to those electronic mail documents, and in particular, to printing electronic mail documents having multiple attachments having different formats.

Electronic mail has become ubiquitous for business and personal communication. In certain circumstances, people are called upon to print the contents of individual electronic mail documents onto a physical medium such as paper. Printing an electronic mail document typically involves opening the electronic mail document within the electronic mail application program, and using the electronic mail application program to print the contents of the electronic mail document. Certain electronic mail application programs include the ability to print the contents of electronic files attached to the electronic mail document automatically when printing the electronic mail document itself. However, such electronic mail application programs are limited to printing only electronic file attachments that are in certain file formats, typically file formats generated by software distributed by the vendor of the electronic mail application program. If the electronic file attachment is in another format, the user must individually open the electronic file attachment using the appropriate application program for that file, and print the contents of the file attachment using the print function of that application program. Thus, a person called upon to print many electronic mail documents that have multiple attachments must execute many steps to print all of the electronic mail documents and their attachments.

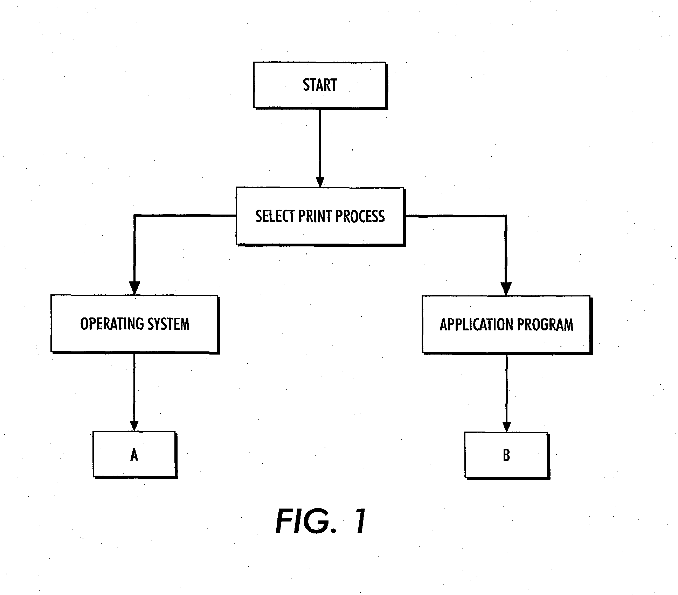

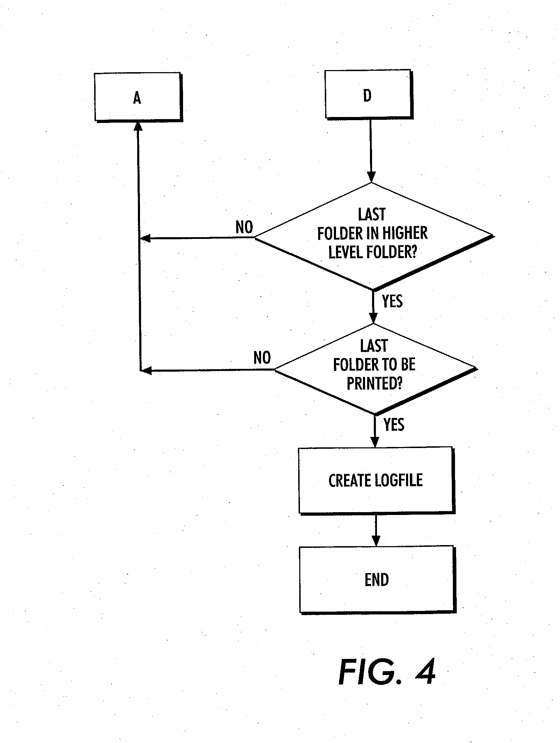

The present invention simplifies and automates printing of electronic mail documents with their associated electronic attachments. An electronic mail printing function accesses computer print functionality external to the electronic mail application program to associate the proper application program with each electronic attachment to an electronic mail document, and to print that attachment. One computer print functionality used is the computer operating system's shell print command.
A particular embodiment will now be described with reference to the accompanying drawings;
in which:-
Figures 1 - 8 are sections of a flow diagram illustrating an implementation of the automated document printing of the present invention.
   For ease of understanding, an implementation of the present invention is described herein as a method or process. Those skilled in the art will recognize that the method described is implemented in computer software compiled to run on a general purpose programmable computer. Those skilled in the art will also recognize that the method can be implemented in special hardware using conventional design elements.

The particular implementation described operates on a general purpose personal computer having a Windows operating system program available from Microsoft Corporation of Redmond, Washington, USA. The steps described can also be implemented on a computer having other operating system programs. The implementation described further supposes that the computer includes an electronic mail application program such as Outlook or Outlook Express, also available from Microsoft Corporation. Nevertheless, other electronic mail application programs can be used.

The overall printing process can be particularly controlled by a human user, or the process can be controlled by an automated controller such as a process controlling application program running on the computer. Referring to Figure 1, the user or the automated controller starts automated electronic mail document printing at step 101. An initial mode selection step 103 is to select whether the printing process is to be conducted from within an electronic mail application program 150, or from within the computer's operating system 104.

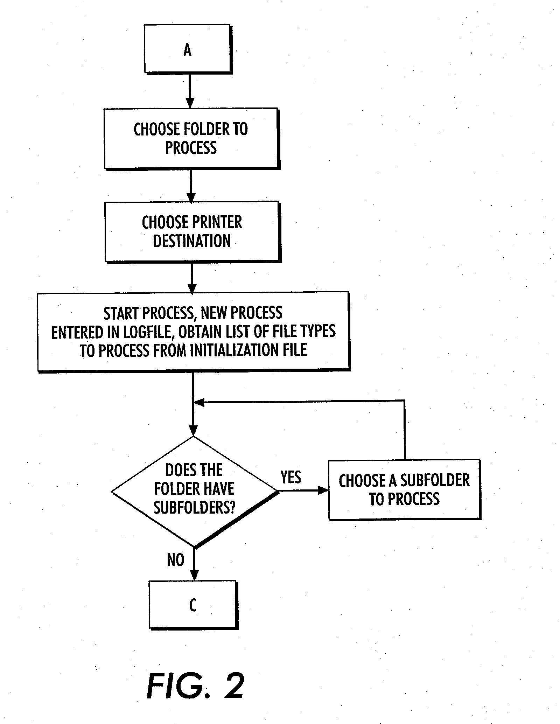

If the computer operating system mode 104 of the automated electronic mail document printing process is selected, additional steps are shown in Figure 2. In the operating system print mode, each electronic mail item or document appears as an electronic file. The automated printing process undertakes steps to select an electronic mail file to print, together with the attachments to that electronic mail file. The electronic mail files to be printed are typically stored in one or more electronic folders in a memory device, such as the computer's hard drive or a removable electronic medium such as a compact disk (CD). A folder selection element, which may be a portion of the controller, selects one of the electronic folders to process 105. A destination printer is chosen 107. For operation on a computer directly connected to one printer, the choice of a printer is self-evident. For operation on a computer connected to a network having multiple printers, either the operator can manually select an appropriate printer, or the control program can select a printer based on predetermined criteria.

Once an electronic folder containing electronic mail files to print has been chosen 105, and a print destination has been chosen 107, the actual automated printing process is initiated 109. If the selection of the print process 103, the selection of the electronic folder to process 105, and the printer upon which to print 107 have all been manually entered by the system user, this step may represent the initiation of the automated control program.

The automated printing process 109 records in an activity log (logfile) the beginning of the process, and determines the types of files that it is expected to process. The controller examines the electronic files attached to the electronic mail files in the electronic folder to be processed to determine the types of files that it is expected to process. This information is stored in an initialization file. Because the electronic mail files to be printed may be nested in layers of electronic folders, the automated printing process searches through successive layers of folders to find the electronic mail files to be printed. The automated printing process determines if the chosen electronic folder contains subfolders 111. If so, the automated printing process chooses one of the subfolders to examine 113. Once the automated printing process controller has identified an electronic mail folder that does not have lower levels of folders, the controller processes and prints the electronic mail files in that folder.

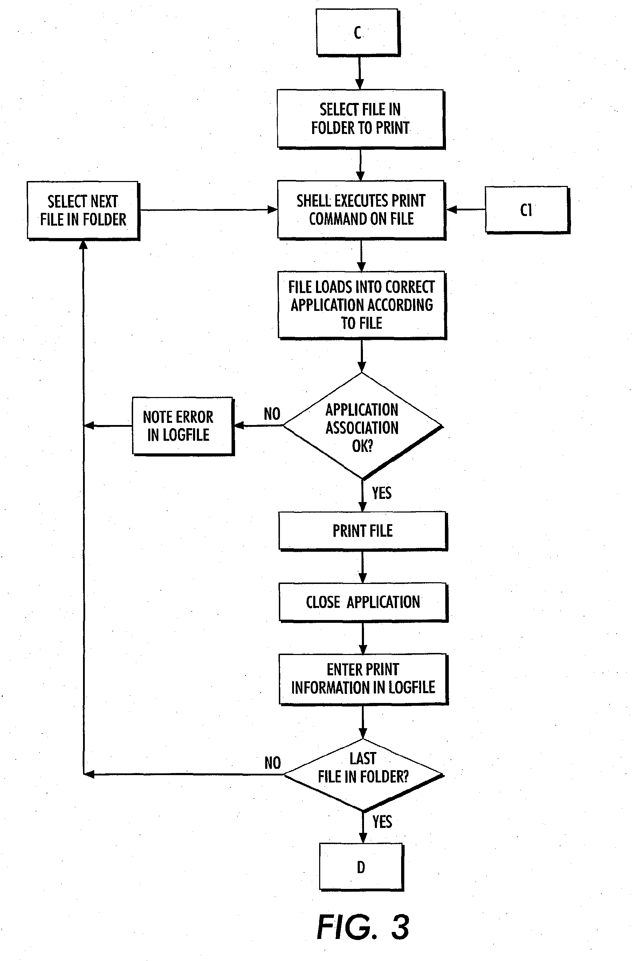

Referring now to Figure 3, the controller functioning in the operating system mode selects an electronic mail file 115 and calls up a shell print command that is not tied to any particular electronic mail application program or other application program. The shell print command is typically an operating system print command, and is familiar to those skilled in the computer arts. The shell or operating system executes the print command on the selected file. In executing the print command, the shell print command identifies the file type, and associates the electronic file with an appropriate application program that is capable of reading and printing the selected electronic file. The print command loads the electronic file into the correct application program 119. If the electronic file type is not supported by an application program on the computer, or if some other problem arises in associating the electronic file with an application program, the controller notes the error in an error or exception log in the logfile 123. The controller selects the next file in the folder being processed 125.

If the shell print command successfully associates the electronic file with an appropriate application program, the application program prints the contents of the electronic file on the selected printer 127. After the contents of the electronic file have been printed, the associated application program is closed 129, and the print information is noted in the logfile 131. After the contents of an electronic file have been printed, the controller determines if the file printed is the last file in the selected folder 133. If not, the controller selects the next file in the folder being processed 125.

If the electronic file just printed is the last filed in the selected folder, the controller proceeds to examine a different folder, repeating the printing process for each folder at each folder level 135. The file selection and command print functions are successively performed on each file in each folder until the contents of all folders to be printed have been either printed or noted in the exception log. Once all of the folders have been processed 137, the controller generates a complete logfile 139, and ends the print process 141. The complete logfile includes a compilation of the exception logfile 123 of errors in associating files with application programs, and the print logfile 131 of successful file print operations.

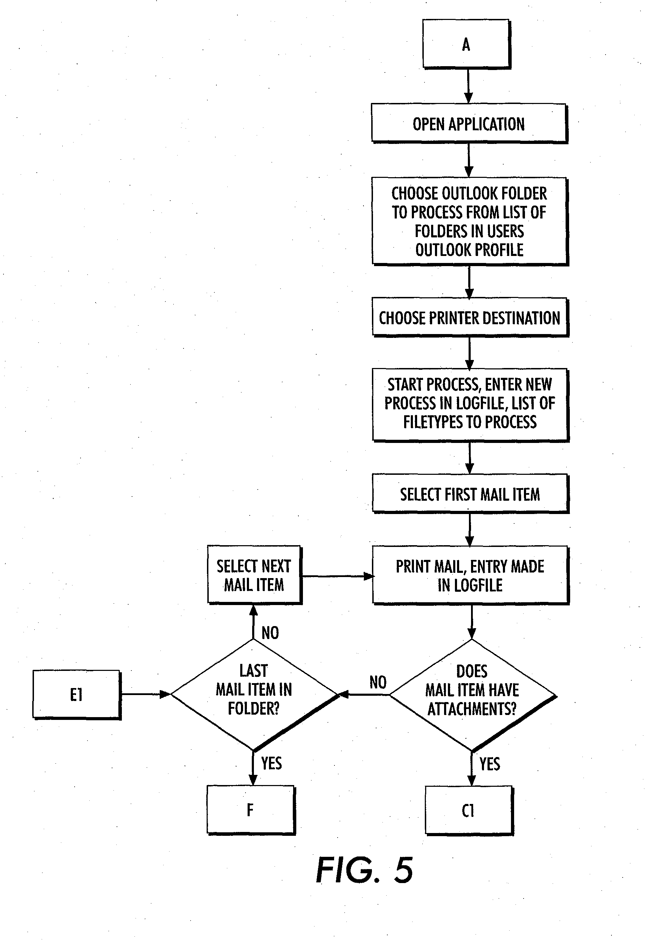

If the electronic mail application program mode 150 (Figure 1) of automated print is selected at the initial mode selection step 103, the controller activates the electronic mail application program 151, such as Outlook by Microsoft Corporation (Figure 5). Individual electronic mail documents are stored in electronic folders within the Outlook electronic mail application program structure. These folders are individualized by the user of the electronic mail application program. The controller chooses an electronic folder to process from among the user's folders 153. The controller selects a destination printer upon which the contents of the electronic mail documents and their attachments are to be printed 155.

The controller begins the automated printing process by entering the new printing process in a logfile and identifying the types of files found in the that are to be printed 157. The controller selects a first electronic mail item (document) 159 and opens it within the electronic mail application program. The controller instructs the electronic mail application program to print the contents of the electronic mail item on the destination printer from within the electronic mail application program 161. The successful print of the electronic mail document is recorded in the logfile.

The controller examines the electronic mail document to determine if the electronic mail document contains attachments 163. If the electronic mail document does not have attachments, the automated printing process has completed printing the entire electronic mail document, and examines the electronic folder from which the electronic mail document was selected to determine if there are other electronic mail documents in the folder 165. If the selected electronic folder contains other electronic mail documents, the controller selects another electronic mail document from the folder 167.

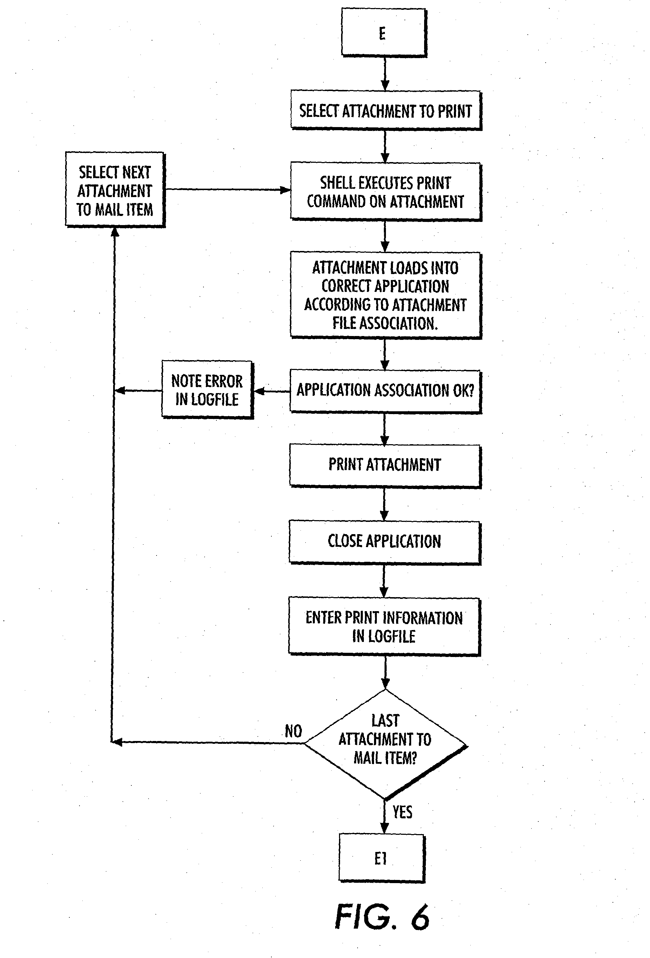

If, when the controller examines the electronic mail document 163 for attachments, the controller determines that the electronic mail document does contain attachments, the controller begins a process for printing the attachments using a print command that is outside the electronic mail application program, such as a shell or operating system print command. Referring now to Figure 6, the controller selects an attachment to print 171. The controller invokes a shell or computer operating system print command on the attachment 173. The shell print command determines the application program to associate with the attachment file type, and, if the computer has the appropriate application program, loads the attachment into the application program 175. If the computer does not have the appropriate application program for the attachment file type, or another error occurs in associating the electronic attachment file with an application program 177, the controller generates an error or exception message in the logfile 179, and selects another of the electronic attachment files for that particular electronic mail document 181.

If the shell print command successfully associates an application program with the electronic attachment file 177, the shell print command causes the selected printer (step 155, Figure 5) to print 183 the contents of the electronic attachment file using the selected printer. The contents of the attachments are most conveniently printed using the same printer as is used to print the contents of the electronic mail document. However, because a separate print command is used to print the attachments, the user may wish to select a different printer for printing the contents of the attachments. After the contents of the electronic attachment file have been printed, the application program associated with the attachment file is closed 185, and the successful print is noted in the print operation logfile 187. The controller determines if the electronic mail document has other electronic attachment files to be printed 189. If the electronic mail document has other attachments to print, the controller selects another attachment, and resumes the process of printing using the print command external to the electronic mail application program.

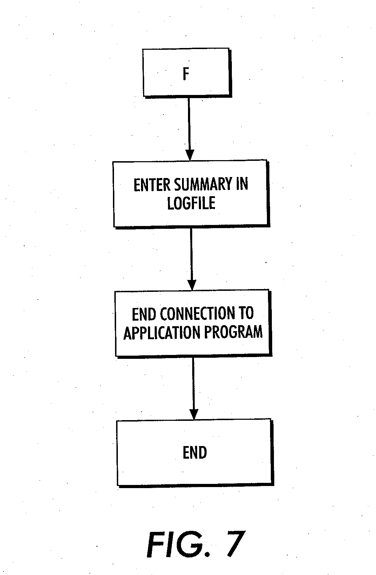

If the electronic mail document has no additional attachment files, the controller determines whether the electronic folder containing the electronic mail document has other electronic mail documents yet to be printed (step 165, Figure 5). If there are no additional electronic mail documents in that folder, the controller determines that the folder being processed has no additional electronic mail documents, the controller then determines if there are other Outlook electronic mail application program folders to process (step 197, Figure 7). If the controller determines that there are no other electronic mail folders to process, the controller enters in the logfile 191 a summary of the print operations (including a summary of the successful prints and of the error messages. The electronic mail application program can then be closed 193, and the print process ends 195.

If the controller determines at step 197 that there are other electronic mail folders to process, the controller chooses another Outlook electronic mail folder to process (step 153, Figure 5), and prints the electronic mail documents and their file attachments in that folder using the shell print command.

Those skilled in the art will recognize that modifications to the particular implementations described above may be made. For example, implementation on a computer using a different computer operating system or a different electronic mail application program may dictate certain changes to the specifics of invoking the print command. In addition, whether implemented with the Microsoft computer operating system and electronic mail application program or with another operating system or electronic mail application program, steps in the process may be undertaken in orders that differ slightly from the orders specified in detail above.

## Claims

1. In a computer having an electronic mail application program for reading electronic mail documents, a method of printing the contents of electronic files attached to an electronic mail document, the method comprising:
accessing a shell print command that operates on the computer external to the electronic mail application program;
selecting an electronic file attached to an electronic mail document;
causing the shell print command to associate the electronic file with a corresponding application program; and
printing the contents of the electronic file on a selected printing apparatus using the shell print command.

2. A method according to claim 1, wherein the shell print command determines a computer file type for the electronic file, and from the computer file type associates the electronic file with a corresponding application program.

3. A method according to claim 1 or 2, wherein the electronic mail application program and the corresponding application program are produced by different entities.

4. A method according to claim 3, wherein the electronic mail application program and the corresponding application program are produced by unrelated entities.

5. A method according to any one of the preceding claims, wherein:
the electronic mail application program is Microsoft Outlook; and
the corresponding application program is from a source other than Microsoft.

6. A method according to claim 1, additionally comprising:
Automatically selecting a first electronic mail document in an electronic folder;
wherein selecting an electronic file comprises selecting a first electronic file attached to the first electronic mail document;
automatically selecting a second electronic mail document in the electronic folder;
selecting a second electronic file attached to the second electronic mail document;
causing the shell print command to associate the second electronic file with a second corresponding application program; and
printing the contents of the electronic file on the selected printing apparatus using the shell print command.

7. In a computer operating under the control of a computer operating system program having an operating system print command, a method of printing a plurality of electronic mail items contained in an electronic mail folder, the method comprising:
a) Selecting a first electronic mail item;
b) Determining if the first electronic mail item contains attachments;
c) If the first electronic mail item contains attachments, selecting a first attachment;
d) Initiating a print operation using the operating system print command;
e e) Associating an application program with the first attachment;
f) Using the operating system print command to cause an attachment printing apparatus to print the attachment;
g) Determining if the first electronic mail item contains a second attachment;
h) If the first electronic mail item contains a second attachment, repeating steps d) through f) for the second attachment;
i) Determining if the electronic mail folder contains a second electronic mail item; and
j) If the folder contains a second electronic mail item, repeating steps b) through h) for the second mail item.

8. A method according to claim 7, additionally comprising using the electronic mail application program to cause a mail item printing apparatus to print the first mail item.

9. A method according to claim 8, wherein the mail item printing apparatus and the attachment printing apparatus are the same printing apparatus.

10. A method according to claim 7 or 8 or 9, wherein the operating system print function comprises a shell print command.
